# NEUE EUROPÄISCHE PATENTSCHRIFT

(11) **EP 0 825 387 B2**
(45) Veröffentlichungstag und Bekanntmachung des Hinweises auf die Entscheidung über den Einspruch: **27.04.2005**
(45) Hinweis auf die Patenterteilung: 05.06.2002
(21) Anmeldenummer: 97113361.6
(22) Anmeldetag: 02.08.1997
(51) Int. Cl.: F24D 3/08

(54) **Hydraulikbaugruppe, anschliessbar an eine kombinierte Heizwasser- und Sanitärwasseranlage**
Hydraulic unit to be installed in a combined heating installation for heating water and sanitary water
Unité hydraulique à être installée dans une installation combinée d'eau de chauffage et d'eau chaude sanitaire

(30) Priorität: 13.08.1996 DE 19632605
(43) Veröffentlichungstag der Anmeldung: 25.02.1998
(73) Patentinhaber: WILO GmbH, D-44263 Dortmund (DE)
(72) Erfinder: Strelow, Günter, 44801 Bochum (DE); Materne, Thomas, 59348 Lüdinghausen (DE)
(74) Vertreter: COHAUSZ DAWIDOWICZ HANNIG & PARTNER

(56) Entgegenhaltungen:
- EP-A- 0 244 915
- EP-A- 0 358 843
- EP-A- 0 548 389
- EP-A- 0 568 122
- EP-A- 0 569 713
- EP-A- 0 652 408
- EP-A- 0 693 658
- DE-T- 69 100 278
- GB-A- 1 525 106
- US-A- 4 756 475

## Beschreibung

Die Erfindung betrifft eine Hydraulikbaugruppe gemäss Oberbegriff von Ansprüchen 1 oder 4.

Aus der EP-A-358843 ist eine Hydraulikbaugruppe bekannt gemäss Oberbegriff von Anspruch 1, die an die Rohrleitungen der Heizwasseranlage sowie an die Rohrleitungen der Sanitärwasseranlage anschließbar ist.

Aus der US-A-4 756 475 ist eine Hydraulik baugruppe gemäss Oberbegriff von Anspruch 4 bekannt.

Aufgabe der Erfindung ist es, eine konstruktiv einfache, preiswert herzustellende und leicht handhabbare Hydraulikbaugruppe der eingangs genannten Art zu schaffen, die bei einer kompakten Bauweise und geringem Gewicht einen geringen Raumbedarf hat und schnell und einfach an den Heizwasser und/oder an den Sanitärwasserkreislauf anschließbar ist.

Diese Aufgabe wird erfindungsgemäß durch die jeweiligen Merkmale im kennzeichnenden Teil. des Ansprüche 1 oder 4 gelöst.

Mit einem in die Pumpe integrierten Dreiwegeventil wird nur eine einzige Pumpe benötigt, in die das Dreiwegeventil integriert ist. Das Ventil kann vorteilhafterweise direkt durch die Pumpe, insbesondere durch An- und Abschalten der Pumpe gesteuert werden, so daß zusätzliche Mittel zur Steuerung oder Regelung des Dreiwegeventils nicht erforderlich sind.

In beiden Lösungsfällen bildet die Hydraulikbaugruppe eine kompakte getrennte Einheit, die an den Heizwasser- und gleichzeitig oder nachträglich an den Sanitärwasserkreislauf angeschlossen werden kann.

Bei einfacher Konstruktion wird eine kompakte Bauweise erreicht, die nur einen geringen Bauraum beansprucht und ein geringes Gewicht hat. Die getrennte Einheit kann auf einfache Weise auch nachträglich an eine Heizwasser- und/oder Sanitärwasseranlage angeschlossen werden. Dabei ist eine Überprüfung der einzelnen Komponenten der Hydraulikbaugruppe nicht mehr erforderlich. Diese Prüfung kann bereits bei der Vormontage der Hydraulikbaugruppe beim Hersteller erfolgen. Da ein getrenntes Dreiwegeventil mit aufwendigen Steuerungsmitteln nicht benötigt wird, ist die Einheit preiswert herzustellen und einfach handzuhaben.

Weitere vorteilhafte Ausführungsformen der erfindungsgmäßen Hydraulikbaugruppe ergeben sich aus den Unteransprüchen.

So kann bei der ersten Lösungsmöglichkeit eine besonders kleine und kompakte Einheit dadurch erreicht werden, daß die erste Pumpe und die zweite Pumpe durch eine Doppelpumpe gebildet sind. Dabei kann zwischen den Heizkörpern und der ersten Pumpe bzw. der Doppelpumpe sowie zwischen dem Wärmetauscher zum Erwärmen des Sanitärwassers und der zweiten Pumpe bzw. der Doppelpumpe jeweils ein Rückflußverhinderer in die Hydraulikbaugruppe integriert sein. Die Rückflußverhinderer verhindern eine Cirkulation des Wassers entgegen der beabsichtigten Flußrichtung, wodurch eine gegenseitige Wärmebeeinflussung der Kreisläufe verhindert wird. Auch ist es möglich, die Rückflußverhinderer in die Pumpen, insbesondere in die Doppelpumpe zu integrieren, um eine noch kompaktere Bauweise zu erreichen.

Die Pumpe oder die Pumpen kann/können vor den Heizkörpern im Vorlauf oder hinter den Heizkörpern im Rücklauf angeordnet sein. Durch den Einbau der Pumpe(n) in den Rücklauf kann die thermische Belastung der Pumpe (n) gering gehalten werden. Auch ist hier eine Entlüftungsvorrichtung der Wasserkreisläufe in die Pumpe(n) integrierbar. Beim Einbau der Pumpe(n) in den Vorlauf wird verhindert, daß Luft aus dem Heizwasserkreislauf in die Pumpe(n) gelangt, so daß stets die volle Pumpenleistung genutzt werden kann.

Bei der Bauform mit zwei getrennten Pumpen ist es ebenfalls möglich, eine Pumpe vor den Heizkörpern im Vorlauf und die zweite Pumpe hinter dem Wärmetauscher zum Erwärmen des Sanitärwassers im Rücklauf anzuordnen. Umgekehrt ist es auch möglich, eine Pumpe vor dem Wärmetauscher zum Erwärmen des Sanitärwassers im Vorlauf und die andere Pumpe hinter den Heizkörpern im Rücklauf anzuordnen. Dadurch können die beiden Pumpen auf besonders kompakte Weise um den Wärmetauscher zum Erwärmen des Sanitärwassers angeordnet werden.

Die Pumpen können entweder extern durch übergeordnete Regler oder autark mittels einer integrierten Sensorik zum internen Messen der Pumpendrehzahl oder der Druckdifferenz geregelt werden.

Als Wärmequelle zum Erwärmen des Heizwassers wird vorzugsweise ein Brenner insbesondere ein Gasoder ölbrenner eingesetzt. Alternativ ist als Wärmequelle auch eine Vorrichtung zur Nutzung von Femwärme möglich. Dabei kann diese Vorrichtung einen Fernwärme-Wärmetauscher umfassen, über den das Heizwasser von dem Fernwärmestrom erwärmt wird. Eine andere Möglichkeit zur Nutzung von Fernwärme besteht darin, daß durch die Vorrichtung ein Teil des Fernwärmewasserstroms als Heizwasser für den Heizwasserkreislauf abgezweigt wird.

Vorteilhaft ist es, wenn parallel zu dem Abschnitt des Heizwasserkreislaufs mit den Heizkörpern ein automatischer Bypass mit einem Rückflußverhinderer in die Hydraulikbaugruppe integriert ist. Der Rückflußverhinderer öffnet als Ventil den Bypass, wenn der Druck über einen bestimmten einstellbaren Wert ansteigt, so daß ein unerwünschter Hitzestau durch Nachheizen des Wärmetauschers zum Erwärmen des Heizwassers vermieden werden kann. Beim Einsatz von regelbaren Pumpen ist ein solcher Bypass nicht erforderlich.

Vorteilhaft ist es ferner, wenn in die Hydraulikbaugruppe eine Sanitärpumpe zur Zirkulation des Sanitärwassers integriert ist. Da das Sanitärwasser aus hygienischen Gründen im Sanitärwasserkreislauf zirkulieren muß, ist es erforderlich, eine Sanitärpumpe im Sanitärwasserrohrleitungssystem vorzusehen. Die Montagearbeiten können für den Kunden erheblich verringert werden, wenn die Sanitärpumpe bereits in der anschließbaren Einheit enthalten ist. Dabei kann die Sanitärpumpe hinter dem Wärmetauscher zum Erwärmen des Sanitärwassers im Vorlauf oder vor dem Wärmetauscher zum Erwärmen des Sanitärwassers im Rücklauf des Sanitärwasserkreislaufs angeordnet sein.

Die Hydraulikbaugruppe kann noch kompakter ausgeführt werden, wenn die Wärmequelle und der Wärmetauscher zum Erwärmen des Heizwassers in die Einheit integriert sind, die auf diese Weise eine komplette Anlage als Heißwasserbereiter bildet.

Das Gewicht der Hydraulikbaugruppe kann weiter verringer werden, wenn der Wärmetauscher zum Erwärmen des Sanitärwassers aus Kunststoff, vorzugsweise aus Polyamid gefertigt ist.

Die Erfindung wird anhand der nachfolgenden Beschreibung und den in den Zeichnungen dargestellten Ausführungsbeispielen näher erläutert.

Die Figuren zeigen jeweils eine kombinierte Heizwasserund Sanitärwasseranlage mit einer erfindungsgemäßen Hydraulikbaugruppe, bei der die Pumpe/Pumpen folgendermaßen angeordnet sind:
- Figur 1: zwei Pumpen im Vorlauf,
- Figur 2: zwei Pumpen im Rücklauf,
- Figur 3 und Figur 4: jeweils eine Pumpe im Vorlauf und eine Pumpe im Rücklauf,
- Figur 5,: eine Doppelpumpe im Vorlauf,
- Figur 6: eine Doppelpumpe im Rücklauf,
- Figur 7: eine Pumpe mit integriertem Dreiwegeventil im Vorlauf und
- Figur 8: eine Pumpe mit integriertem Dreiwegeventil im Rücklauf.
- Figur 9: eine Pumpe mit integriertem Dreiwegeventil im Vorlauf und eine Sanitärpumpe im Rücklauf des Sanitärwasserkreislaufs.

Die in den Figuren dargestellte kombinierte Heizwasserund Sanitärwasseranlage 1 umfaßt einen Heizwasserkreislauf 2 und einen Sanitärwasserkreislauf 3. In den Leitungen des Heizwasserkreislaufs 2 sind mehrere Heizkörper 4 zum Erwärmen von Räumen angeordnet. Im Sanitärwasserkreislauf 3 sind mehrere Einrichtungen 5 zur Entnahme von Brauchwasser vorgesehen.

Der Heizwasserkreislauf 2 ist mit seinen Anschlüssen 6a, 6b an die Anschlüsse 7a, 7b der Hydraulikbaugruppe 8 angeschlossen. Auf gleiche Weise ist der Sanitärwasserkreislauf 3 über die Anschlüsse 9a, 9b an die Anschlüsse 10a, 10b der Hydraulikbaugruppe 8 angeschlossen.

Als Wärmequelle zur Erwärmung des Heizwassers dient der Brenner 11 und der Hauptwärmetauscher 12. Der Hauptwärmetauscher 12 ist über die Anschlüsse 13a, 13b an die Anschlüsse 14a, 14b der Hydraulikbaugruppe 8 angeschlossen.

Die fertig vormontierte Hydraulikbaugruppe 8 weist insgesamt sechs Anschlüsse 7a, 7b, 10a, 10b, 14a, 14b auf, so daß sie auf einfache Weise schnell in die kombinierte Heizwasser- und Sanitärwasseranlage 1 eingebaut werden kann. Falls der Brenner 11 und der Hauptwärmetauscher 12 in die Hydraulikbaugruppe 8 integriert werden, so ist die Hydraulikbaugruppe 8 als Heißwasserbereiter mit nur vier Anschlüssen 7a, 7b, 10a, 10b an die Heizwasser- und Sanitärwasseranlage 1 anschließbar.

Parallel zum Abschnitt 2a mit den Heizkörpern 4 des Heizwasserkreislaufs 2 ist ein Bypass 15 mit einem Rückflußverhinderer 16 in die Hydraulikbaugruppe 8 integriert.

Ein zweiter Wärmetauscher 17 zum Erwärmen des Sanitärwassers ist in einer parallel zum Abschnitt 2a und zum Bypass 15 verlaufenden Leitung 18 angeordnet.

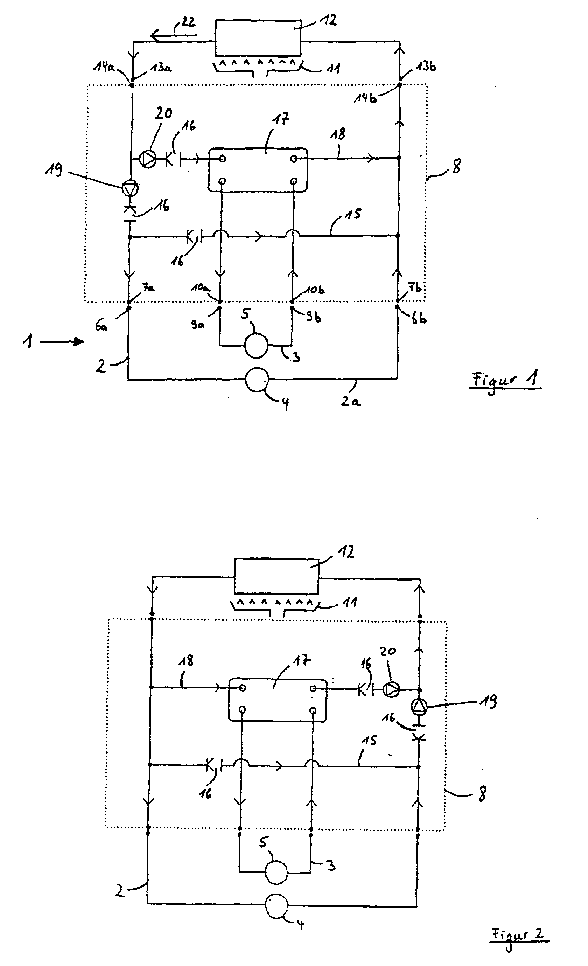

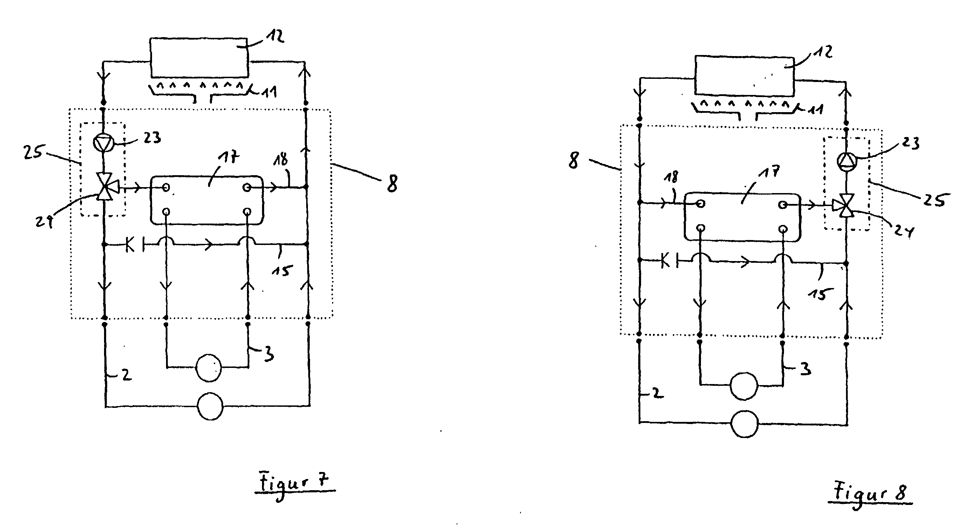

Zur Steuerung der kombinierten Heizwasser- und Sanitärwasseranlage 1 können zwei getrennte Pumpen 19 und 20 im Vorlauf (Figur 1) oder im Rücklauf (Figur 2) des Heizwasserkreislaufs 2 angeordnet sein. Anstelle der beiden getrennten Pumpen 19 und 20 ist es auch möglich, eine einzige Doppelpumpe 21 vorzusehen (Figur 5 und Figur 6).

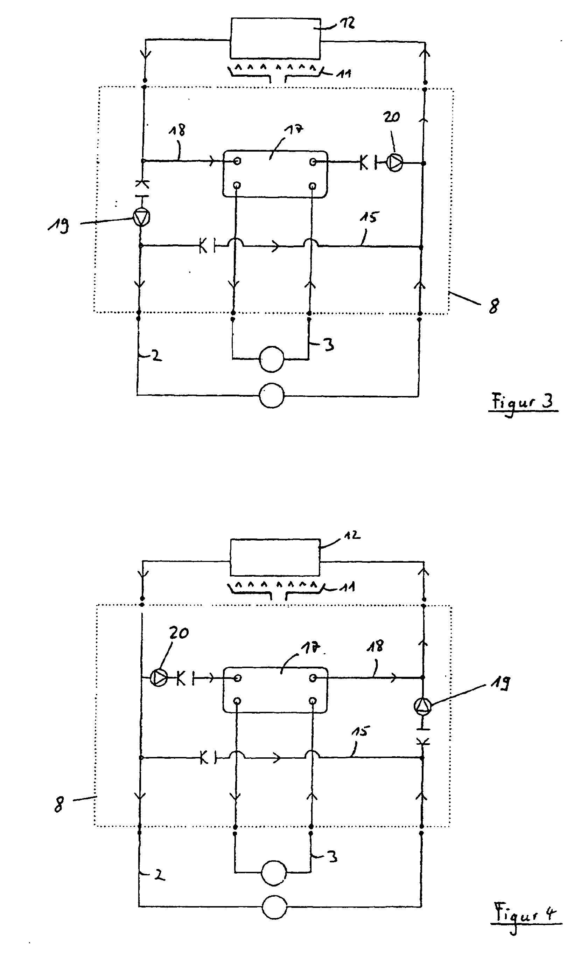

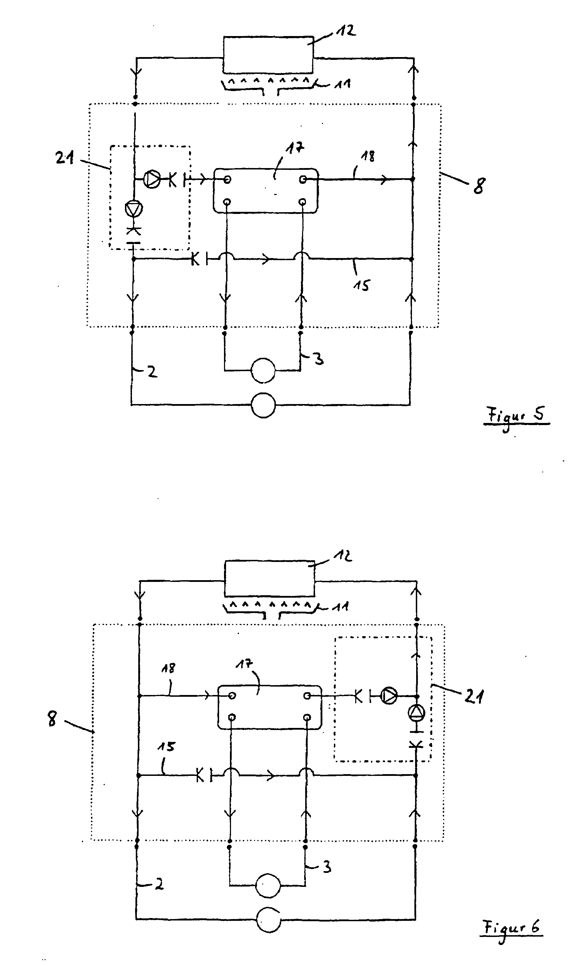

Bei der in Figur 3 und Figur 4 dargestellten Anordnung ist die Pumpe 19 im Vorlauf des Heizwasserkreislaufs 2 und die Pumpe 20 hinter dem Wärmetauscher 17 in der Leitung 18 angeordnet (Figur 3). Figur 4 zeigt den umgekehrten Fall, bei dem die Pumpe 19 im Rücklauf des Heizwasserkreislaufs 2 und die Pumpe 20 vor dem Wärmetauscher 17 in der Leitung 18 angeordnet ist.

Jeder Pumpe 19, 20 bzw. jeder Pumpeneinheit der Doppelpumpe 21 ist ein Rückflußverhinderer 16 beigeordnet, durch die das Fließen des Heizwassers entgegen der Richtung 22 im Heizwasserkreislauf 2 verhindert wird.

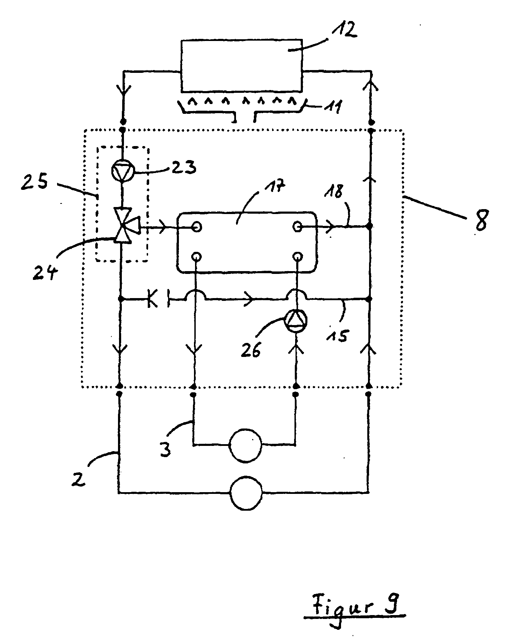

Die Figuren 7 und 8 zeigen Ausführungsbeispiele einer erfindungsgemäßen Hydraulikbaugruppe 8, die jeweils nur mit einer einzigen Pumpe 23 arbeiten. Dabei ist ein Dreiwegeventil 24 in die Pumpe 23 integriert, das direkt durch An- und Abschalten der Pumpe 23 steuerbar ist. Die Einheit 25 aus Pumpe 23 mit integriertem Dreiwegeventil 24 kann entweder im Vorlauf des Heizwasserkreislaufs 2 (Figur 7) oder im Rücklauf des Heizwasserkreislaufs 2 (Figur 8) angeordnet sein.

Figur 9 zeigt die Anordnung aus Figur 7, wobei zusätzlich eine Sanitärpumpe 26 im Rücklauf des Sanitärwasserkreislaufs 3 in die Hydraulikbaugruppe 8 integriert ist.

Alternativ zum Gas- oder ölbrenner als Wärmequelle ist auch die Nutzung von Fern- oder Nahwärme oder ein mehreren Unterstationen vorgeschalteter zentraler Gas- bzw. ölkessel, d.h. eine externe Wärmeerzeugung, möglich. Bei externer Wärmeerzeugung sind die Hydraulikbaugruppen in der in der Fernwärme üblichen Anordnung über Absperrarmaturen, Schmutzfänger, Stellventile, ggf. Differenzdruckregler und Wärmezähler an die Zuführungsleitungen anzuschließen.

Bei einer Anordnung der Wärmequelle als Nahwärme sind alle Verbraucher insbesondere Wohnungseinheiten zueinander parallel an einver Vorlauf- und einer Rücklaufleitung angeschlossen.

Der Hydraulikblock ist vorteilhaft sowohl bei einer direkten, als auch bei einer indirekten Heizkreisanbindung einzusetzen.

Bei der direkten Heizkreisanbindung fließt das Wasser aus den Zuführungsleitungen auch gleichzeitig durch die Heizkreise, während bei der indirekten Anbindung durch den Wärmetauscher zwei hydraulisch getrennte Kreisläufe hergestellt werden.

Bei externer Wärmeerzeugung ist im Unterschied zur Gastherme bzw. dem ölkessel eine Druckdifferenz zwischen dem Vor- und dem Rücklauf der Zuführungsleitungen vorhanden. Zur Temperatur- und Durchsatzregelung ist deshalb ein Stellventil erforderlich.

Es ist bekannt, daß dieses Stellventil in einigen Fernwärmestationen je nach Bedarfsanforderung die Vorlauftemperatur im Heizkreis oder im Sanitärwasser-Vorlauf regelt. Desweiteren ist bekannt, daß das Stellventil 1 eine Begrenzung der maximalen Rücklauftemperatur und eine Warmhaltung der Fernwärmeleitungen bei abgestellter Heizung im Sommerbetrieb bewirken kann. Diese Aufgaben kann das Stellventil auch bei Einsatz der Hydraulikbaugruppe erfüllen.

Über den hydraulischen Geber wird festgestellt, ob Sanitärwasser gezapft wird. Der Regler erhält diese Informationen und entscheidet, welcher Sollwert jeweils zu regeln ist, Heizkreis- oder Sanitärwasservorlauf. Das Umschaltventil 9 gibt den betreffenden Kreislauf frei.

Für die Heizkostenverteilung wird die Umwälzpumpe des Hydraulikblocks genutzt.

Es ist bekannt, daß der Förderstrom einer Pumpe aus den Leistungsdaten des Motors berechnet werden kann. Bei der Anordnung der Temperaturfühler wird mit einem geeigneten Rechner aus dem Förderstrom und der Temperaturdifferenz zwischen Vor- und Rücklauf auch der Wärmeverbrauch berechnet. Dies ist sowohl bei der direkten als auch bei einer indirekten Anlage möglich.

Zur Regelung von Fernwärmestationen werden spezielle und deshalb teure Heizungsregler eingesetzt. Gasthermenregler sind aufgrund der größeren Fertigungsstückzahlen erheblich preiswerter. Die Software von Gasthermenreglern ist auch geeignet, die Hydraulikbaugruppe bei externer Wärmeerzeugung zu regeln.

Es wird vorgeschlagen, zur Regelung der Hydraulikbaugruppe auch bei externer Wärmeerzeugung, Gasthermenregler einzusetzen. Ein solcher Gasthermenregler weist eine Elektronik auf, durch die die steuerbaren Teile der Hydraulikbaugruppen regelbar sind.

## Patentansprüche

1. Hydraulikbaugruppe, die an eine kombinierte Heizwasser- und Sanitärwasseranlage mit einer Pumpe, mindestens einer Vorrichtung zum Erwärmen von Räumen, insbesondere einem Heizkörper, einer Wärmequelle und mindestens einem Wärmetauscher zum Erwärmen von Heiz- und/oder Sanitärwasser anschließbar ist,
**dadurch gekennzeichnet,**
**daß** die Pumpe (19) mit einer zweiten Pumpe (20) sowie mit dem Wärmetauscher (17) zum Erwärmen des Sanitärwassers eine an den Heizwasser- (2) und an den Sanitärwasserkreislauf (3) anschließbare Einheit (8) bildet,
und **daß** eine Einrichtung zum Abfangen von Druckspitzen im Sanitärwasserkreislauf (3), insbesondere eine Membran, in die Hydraulikbaugruppe integriert ist.

2. Hydraulikbaugruppe nach Anspruch 1,
**dadurch gekennzeichnet, daß** die erste Pumpe und die zweite Pumpe durch eine Doppelpumpe (21) gebildet sind.

3. Hydraulikbaugruppe nach Anspruch 1 oder 2,
**dadurch gekennzeichnet, daß** zwischen den Heizkörpern (4) und der ersten Pumpe (19) bzw. der Doppelpumpe (21) sowie zwischen dem Wärmetauscher (17) zum Erwärmen des Sanitärwassers und der zweiten Pumpe (20) bzw. der Doppelpumpe (21) jeweils ein Rückflußverhinderer (16) in die Hydraulikbaugruppe (8) integriert ist.

4. Hydraulikbaugruppe, die an eine kombinierte Heizwasser- und Sanitärwasseranlage mit einer Pumpe, mindestens einer Vorrichtung zum Erwärmen von Räumen, insbesondere einem Heizkörper, einer Wärmequelle und mindestens einem Wärmetauscher zum Erwärmen von Heiz- und/oder Sanitärwasser anschließbar ist, wobei die Pumpe (23) mit einem in die Pumpe (23) integrierten Drei-Wege-Ventil (24) sowie mit dem Wärmetauscher (17) zum Erwärmen des Sanitärwassers eine an den Heizwasser-(2) und an den Sanitärwasserkreislauf (3) anschließbare Einheit (8) bildet,
**dadurch gekennzeichnet, daß** eine Einrichtung zum Abfangen von Druckspitzen im Sanitärwasserkreislauf (3), insbesondere eine Membran, in die Hydraulikbaugruppe integriert ist.

5. Hydraulikbaugruppe nach Anspruch 4,
**dadurch gekennzeichnet, daß** das Drei-Wege-Ventil (24) direkt durch die Pumpe (23), insbesondere durch An- und Abschalten der Pumpe (23), steuerbar ist.

6. Hydraulikbaugruppe nach einem der vorherigen Ansprüche,
**dadurch gekennzeichnet, daß** die Pumpe(n) (19, 20, 21, 23) vor den Heizkörpern (4) (Vorlauf) oder hinter den Heizkörpern (4) (Rücklauf) angeordnet ist (sind).

7. Hydraulikbaugruppe nach Anspruch 1 oder 3,
**dadurch gekennzeichnet, daß** eine Pumpe (19, 20) vor den Heizkörpern (4) (Vorlauf) und die zweite Pumpe (20, 19) hinter den Heizkörpern (4) (Rücklauf) angeordnet ist.

8. Hydraulikbaugruppe nach einem der vorherigen Ansprüche,
**dadurch gekennzeichnet, daß** die Pumpe(n) (19, 20, 21, 23) extern oder autark regelbar ist (sind).

9. Hydraulikbaugruppe nach einem der vorherigen Ansprüche,
**dadurch gekennzeichnet, daß** die Wärmequelle einen Brenner (11), insbesondere einen Gasbrenner umfaßt.

10. Hydraulikbaugruppe nach einem der Ansprüche 1 bis 8,
**dadurch gekennzeichnet, daß** die Wärmequelle eine Vorrichtung zur Nutzung von Fernwärme, insbesondere einen Fernwärme-Wärmetauscher (12) umfaßt.

11. Hydraulikbaugruppe nach einem der vorherigen Ansprüche,
**dadurch gekennzeichnet, daß** parallel zu dem Abschnitt (2a) des Heizwasserkreislaufs (2) mit den Heizkörpern (4) ein Bypass (15) insbesondere mit einem Rückflußverhinderer (16) in die Hydraulikbaugruppe (8) integriert ist.

12. Hydraulikbaugruppe nach einem der vorherigen Ansprüche,
**dadurch gekennzeichnet, daß** eine Sanitärpumpe (26) zur Zirkulation des Sanitärwassers im Sanitärwasserkreislauf in die Hydraulikbaugruppe (8) integriert ist.

13. Hydraulikbaugruppe nach einem der vorherigen Ansprüche,
**dadurch gekennzeichnet, daß** der Wärmetauscher (17) zum Erwärmen des Sanitärwassers aus Kunststoff, vorzugsweise aus Polyamid, gefertigt ist.

14. Hydraulikbaugruppe nach einem der vorherigen Ansprüche,
**dadurch gekennzeichnet, daß** die Wärmequelle (11) und der Wärmetauscher (12) zum Erwärmen des Heizwassers in die anschließbare Einheit (8) integriert sind.

15. Hydraulikbaugruppe nach einem der vorherigen Ansprüche,
**dadurch gekennzeichnet, daß** die Wärmequelle von der Hydraulikbaugruppe entfernt im gleichen oder benachbarten Gebäude angeordnet ist (Nahwärme).

16. Hydraulikbaugruppe nach einem der vorherigen Ansprüche,
**dadurch gekennzeichnet, daß** eine Pumpe (19, 20) als Wärmemengenzähler dient.

17. Hydraulikbaugruppe nach einem der vorherigen Ansprüche,
**dadurch gekennzeichnet, daß**
eine Einrichtung zur Entlüftung und/oder zur Filtrierung des Wassers des Heizwasserkreislaufs (2) und/oder des Wassers des Sanitärwasserkreislaufs (3) in die Hydraulikbaugruppe integriert ist.

## Claims

1. A hydraulic assembly, which can be connected to a combined heating water and sanitary water system with a pump, at least one device for the heating of rooms, in particular a radiator, a heat source and at least one heat exchanger for the heating of heating and/or sanitary water,
**characterized in that**
the pump (19) forms a unit (8) with a second pump (20) and with the heat exchanger (17) for the heating of the sanitary water, the said unit being connectable to the heating water circuit (2) and the sanitary water circuit (3), and that integrated in the hydraulic assembly is a device for the purpose of cushioning pressure peaks in the sanitary water circuit (3), in particular a diaphragm.

2. A hydraulic assembly according to Claim 1,
**characterized in that** the first pump and the second pump are formed by a double pump (21).

3. A hydraulic assembly according to Claim 1 or 2
**characterized in that** between the radiators (4) and the first pump (19) or the double pump (21) and between the heat exchanger (17) for the heating of the sanitary water and the second pump (20) or the double pump (21) there is in each case a check valve (16) integrated in the hydraulic assembly (8).

4. A hydraulic assembly, which can be connected to a combined heating water and sanitary water system with a pump, at least one device for the heating of rooms, in particular a radiator, a heat source and at least one heat exchanger for the heating of heating and/or sanitary water, the pump (23) forming one unit (8) with a three-way directional control valve (24) integrated in the pump (23) and with the heat exchanger (17) for the heating of the sanitary water, the said unit being connectable to the heating water circuit (2) and the sanitary water circuit (3),
**characterized in that** integrated in the hydraulic assembly is a device for the purpose of cushioning pressure peaks in the sanitary water circuit (3) in particular a diaphragm.

5. A hydraulic assembly according to Claim 4,
**characterized in that** the three-way directional control valve (24) can be controlled directly through the pump (23), in particular by activating and deactivating the pump (23).

6. A hydraulic assembly according to any of the preceding claims
**characterized in that** the pump(s) (19, 20, 21, 23) is (are) arranged upstream of the radiators (4) (inlet) or downstream of the radiators (4) (outlet).

7. A hydraulic assembly according to Claim 1 or 3,
**characterized in that** one pump (19, 20) is arranged upstream of the radiators (4) (inlet) and the second pump (20, 19) downstream of the radiators (4) (outlet).

8. A hydraulic assembly according to any of the preceding claims,
**characterized in that** the pump(s) (19, 20, 21, 23) can be controlled externally or by self-controlling action,

9. A hydraulic assembly according to any of the preceding claims,
**characterized in that** the heat source comprises a burner (11), in particular a gas burner.

10. A hydraulic assembly according to any of Claims 1 to 8,
**characterized in that** the heat source comprises a device for the utilization of district heating, in particular a district heating heat exchanger (12).

11. A hydraulic assembly according to any of the preceding claims,
**characterized in that** parallel to the section (2a) of the heating water circuit (2) with the radiators (4), a bypass (15), in particular with a check valve (16), is integrated in the hydraulic assembly (8).

12. A hydraulic assembly according to any of the preceding claims,
**characterized in that** a sanitary pump (26) for circulation of the sanitary water in the sanitary water circuit is integrated in the hydraulic assembly (8),

13. A hydraulic assembly according to any of the preceding claims,
**characterized in that** the heat exchanger (17) for the heating of the sanitary water is manufactured from plastic, preferentially from polyamide.

14. A hydraulic assembly according to any of the preceding claims,
**characterized in that** the heat source (11) and the heat exchanger (12) for the heating of the heating water are integrated in the connectable unit (8).

15. A hydraulic assembly according to any of the preceding claims,
**characterized in that** the heat source is arranged at a distance from the hydraulic assembly in the same or in a neighbouring building (local heating).

16. A hydraulic assembly according to any of the preceding claims,
**characterized in that** one pump (19, 20) serves as a heat flow meter.

17. A hydraulic assembly according to any of the preceding claims,
**characterized in that** a device for the purpose of venting and/or filtering the water of the heating water circuit (2) and/or the water of the sanitary water circuit (3) is integrated in the hydraulic assembly.

## Revendications

1. Groupe constructif hydraulique qui peut être raccordé à une installation combinée d'eau de chauffage et d'eau sanitaire, avec une pompe, au moins un dispositif de chauffage de locaux, en particulier un radiateur, une source de chaleur et au moins un échangeur de chaleur pour chauffer de l'eau de chauffage et/ou sanitaire,
**caractérisé en ce**
**que** la pompe (19) forme, avec une seconde pompe (20) ainsi qu'avec l'échangeur de chaleur (17) pour chauffer l'eau sanitaire, une unité (8) pouvant être raccordée au circuit d'eau de chauffage (2) et au circuit d'eau sanitaire (3),
et **qu'**un dispositif pour l'interception de pointes de pression dans le circuit d'eau sanitaire (3), en particulier une membrane, est intégré dans le groupe constructif hydraulique.

2. Groupe constructif hydraulique selon la revendication 1,
**caractérisé en ce que** la première pompe et la seconde pompe sont formées par une pompe double (21).

3. Groupe constructif hydraulique selon la revendication 1 ou 2,
**caractérisé en ce qu'**un inhibiteur de refluement (16) est intégré dans le groupe constructif hydraulique (8) respectivement entre les radiateurs (4) et la première pompe (19) ou respectivement la pompe double (21) ainsi qu'entre l'échangeur de chaleur (17) pour chauffer l'eau sanitaire et la seconde pompe (20) ou respectivement la pompe double (21).

4. Groupe constructif hydraulique qui peut être raccordé à une installation combinée d'eau de chauffage et d'eau sanitaire, avec une pompe, au moins un dispositif de chauffage de locaux, en particulier un radiateur, une source de chaleur et au moins un échangeur de chaleur pour chauffer de l'eau de chauffage et/ou sanitaire, la pompe (23) formant, avec une vanne trois voies (24) intégrée dans la pompe (23) ainsi qu'avec l'échangeur de chaleur (17) pour chauffer l'eau sanitaire, une unité (8) pouvant être raccordée au circuit d'eau de chauffage (2) et au circuit d'eau sanitaire (3),
**caractérisé en ce qu'**un dispositif pour l'interception de pointes de pression dans le circuit d'eau sanitaire (3), en particulier une membrane, est intégré dans le groupe constructif hydraulique.

5. Groupe constructif hydraulique selon la revendication 4,
**caractérisé en ce que** la vanne trois voies (24) peut être commandée directement par la pompe (23), en particulier par mise en marche et à l'arrêt de la pompe (28).

6. Groupe constructif hydraulique salon l'une des revendications précédentes,
**caractérisé en ce que** la (les) pompe(s) (19, 20, 21, 23) est (sont) disposée(s) avant les radiateurs (4) (aller) ou après les radiateurs (4) (retour).

7. Groupe constructif hydraulique selon la revendication 1 ou 3,
**caractérisé en ce qu'**une pompe (19, 20) est disposée avant les radiateurs (4) (aller) et la seconde pompe (20, 19) après les radiateurs (4) (retour).

8. Groupe constructif hydraulique selon l'une des revendications précédentes,
**caractérisé en ce que** la (les) pompe(s) (19, 20, 21, 23) peut (peuvent) être commandée(s) de manière externe ou de manière autarcique.

9. Groupe constructif hydraulique selon l'une des revendications précédentes,
**caractérisé en ce que** la source de chaleur comprend un brûleur (1), en particulier un brûleur à gaz.

10. Groupe constructif hydraulique selon l'une des revendications 1 à 8,
**caractérisé en ce que** la source de chaleur comprend un dispositif d'exploitation de chaleur éloignée, en particulier un échangeur de chaleur à chaleur éloignée (12).

11. Groupe constructif hydraulique selon l'une des revendications précédentes,
**caractérisé en ce qu'**une dérivation (15), en particulier avec un inhibiteur de refluement (16), est intégrée dans le groupe constructif hydraulique (8) en parallèle à la section (2a) du circuit d'eau de chauffage (2) avec les radiateurs (4).

12. Groupe constructif hydraulique salon l'une des revendications précédentes,
**caractérisé en ce qu'**une pompe sanitaire (26) est intégrée dans le groupe constructif hydraulique (8) pour la circulation de l'eau sanitaire dans le circuit d'eau sanitaire.

13. Groupe constructif hydraulique selon l'une des revendications précédentes,
**caractérisé en ce que** l'échangeur de chaleur (17) pour chauffer l'eau sanitaire est fabriqué en matière synthétique, de préférence en polyamide.

14. Groupe constructif hydraulique selon l'une des revendications précédentes,
**caractérisé en ce que** la source de chaleur (11) et l'échangeur de chaleur (12) pour chauffer l'eau de chauffage sont intégrés dans l'unité (8) raccordable.

15. Groupe constructif hydraulique selon l'une des revendications précédentes,
**caractérisé en ce que** la source de chaleur est disposée écartée du groupe constructif hydraulique dans le même local ou un local voisin (chaleur proche).

16. Groupe constructif hydraulique selon l'une des revendications précédentes,
**caractérisé en ce qu'**une pompe (19, 20) sert de compteur de quantités de chaleur.

17. Groupe constructif hydraulique selon l'une des revendications précédentes,
**caractérisé en ce qu'**un dispositif d'aération et/ou de filtration de l'eau du circuit d'eau de chauffage (2) et/ou de l'eau du circuit d'eau sanitaire (3) est intégré dans le groupe constructif hydraulique.
